# EUROPÄISCHE PATENTSCHRIFT

(11) **EP 0 912 221 B1**
(45) Veröffentlichungstag und Bekanntmachung des Hinweises auf die Patenterteilung: **12.04.2000**
(21) Anmeldenummer: 97930519.0
(22) Anmeldetag: 11.07.1997
(51) Int. Cl.: B01D 19/04, C09D 7/12, C13D 1/00, C13D 3/00, D21H 21/12

(54) **VERWENDUNG VON MIT ALPHA-OLEFINEPOXIDEN UMGESETZTEN ETHYLENOXID/PROPYLENOXID-ANLAGERUNGSVERBINDUNGEN DES GLYCERINS ODER POLYGLYCERINS ALS ENTSCHÄUMER**
USE AS ANTIFOAMING AGENTS OF ETHYLENE OXIDE - PROPYLENE OXIDE ADDITION COMPOUNDS OF GLYCEROL OR POLYGLYCEROL REACTED WITH ALPHA-OLEFIN EPOXIDES
UTILISATION COMME AGENTS ANTIMOUSSE DE COMPOSES D'ADDITION OXYDE D'ETHYLENE/OXYDE DE PROPYLENE DE GLYCERINE OU DE POLYGLYCERINE MIS A REAGIR AVEC DES ALPHA-EPOXYDES D'OLEFINE

(30) Priorität: 19.07.1996 DE 19629038
(43) Veröffentlichungstag der Anmeldung: 06.05.1999
(73) Patentinhaber: Cognis Deutschland GmbH, 40589 Düsseldorf (DE)
(72) Erfinder: WOLLENWEBER, Horst-Werner, D-40597 Düsseldorf (DE); HEIDBREDER, Andreas, D-40593 Düsseldorf (DE); SAUF, Silvia, D-40878 Ratingen (DE); SLADEK, Hans-Jürgen, D-47800 Krefeld (DE)
(86) Internationale Anmeldenummer: EP9703683
(87) Internationale Veröffentlichungsnummer: WO9803243

(56) Entgegenhaltungen:
- EP-A- 0 340 704
- EP-A- 0 345 684
- DE-A- 3 531 212
- DE-A- 3 535 731
- DE-A- 3 636 086
- US-A- 3 637 869

## Beschreibung

Die Erfindung betrifft die Verwendung von mit alpha-Olefinepoxiden umgesetzten Ethylenoxid/Propylenoxid-Anlagerungsverbindungen des Glycerins oder Polyglycerins als Entschäumer in wässerigen Systemen.

Für eine Vielzahl technischer Prozesse stellt die mit Anwesenheit bzw. mit dem Einsatz von grenzflächenaktiven Substanzen verbundene Schaumentwicklung ein ernsthaftes Problem dar.

Beispielsweise kann es bei der Papierfabrikation durch den Luftgehalt des Wasserkreislaufs zu Schaumbildung kommen, die die Qualität des fertigen Papiers durch Schmutzflecken beeinträchtigt. Bei der Homogenisierung von wasserbasierten Lack- oder Farbbestandteilen kann es durch Schaumbildung zu Lufteinschlüssen innerhalb der Farbe oder des Lacks kommen, die zu ungleichmäßigem Farbauftrag führen können. Bei der industriellen Herstellung oder Verarbeitung von Nahrungsmitteln kommt der Bekämpfung und Verhütung von Schäumen ebenfalls beträchtliche Bedeutung zu. So können beispielsweise bei der industriellen Verarbeitung zuckerhaltiger Pflanzensäfte, wie sie im großen Maßstab bei der Gewinnung von Zuckerrüben erfolgt, besondere Schwierigkeiten durch übermäßige Schaumentwicklung in der Saftgewinnung, -reinigung und in den Verdampfern auftreten. Auch bei der Produktion von Kartoffelfertigprodukten, aber auch bei der Erzeugung von Backhefe unter Verwendung von Melasse, können die stärkehaltigen wässerigen Lösungen zu Schaumproblemen führen.

Zur Bekämpfung bzw. Verhinderung von Schäumen sind im Stand der Technik zahlreiche Verbindungsklassen vorbeschrieben. Insbesondere für die Entschäumung in der Zucker- und Hefeindustrie sind seit langem Fette und Öle wie Rüb-, Erdnuß-, Olivenöl sowie Wollfett in Gebrauch. Darüber hinaus werden in neuerer Zeit auch alkoxylierte Verbindungen als Entschäumer vorgeschlagen. Die DE-A-35 35 731 beschreibt als Antischaummittel für Polymerdispersionen Reaktionsprodukte von endständigen linearen C₈-C₂₄-Epoxidverbindungen mit alkoxylierten Alkoholen. Der DE-B-21 64 907 ist zu entnehmen, daß sich Ethylenoxid- / Propylenoxidanlagerungsprodukte an Fettalkohole als Entschäumer eignen. Die DE-A-36 36 086 beschreibt Fettsäureester von Polyglycerinpolyglykolethern als Entschäumer in wässerigen Zusammensetzungen. Die Polyglycerinpolyglykolether werden hergestellt, indem man pro Mol der im Polyglycerin vorhandenen Hydroxylgruppen mit 2 bis 15 Mol Ethylenoxid, 10 bis 60 Mol Propylenoxid und 1 bis 3 Mol Fettsäure umsetzt. Die DE-A-35 31 212 beschreibt als Entschäumer Glycerin- und Polyglycerinblockpolymere, die pro Mol Glycerin oder Polyglycerin in einer ersten Stufe mit 1 bis 15 Mol Ethylenoxid, in einer zweiten Stufe mit 50 bis 250 Mol Propylenoxid und in einer dritten Stufe mit 1 bis 15 Mol Ethylenoxid umgesetzt werden.

Aufgrund der vielfältigen anwendungstechnischen Anforderungen an Entschäumer, insbesondere in Bezug auf deren Stabilität gegenüber Hydrolyse und der biologischen Abbaubarkeit, besteht nach wie vor das Bedürfnis, weitere Verbindungen als Entschäumer zugänglich zu machen.

Es wurde nun gefunden, das sich bestimmte endgruppenverschlossene Glycerin- bzw. Polyglycerinblockpolymere als Entschäumer eignen und dabei gegenüber bekannten Verbindungen eine verbesserte entschäumende Wirkung aufweisen.

Gegenstand der vorliegenden Erfindung ist daher die Verwendung von Glycerin- oder Polyglycerin-Anlagerungsprodukten der allgemeinen Formel (I)

[R]ₓ-(EO)ₙ-(PO)ₘ-(AO)ₚ-H (I)

in der [R]ₓ für einen Glycerin- oder Polyglycerinrest steht und EO eine Ethylenoxideinheit, PO eine Propylenoxideinheit und AO einen Rest der Formel (II) 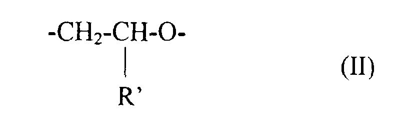 bedeutet, wobei R' ein linearer Alkylrest mit 2 bis 18 Kohlenstoffatomen ist, x eine Zahl zwischen 1 und 6, n eine Zahl zwischen 5 und 60, m eine Zahl zwischen 30 und 300 und p eine Zahl zwischen 1 und 10 bedeutet, wobei die Verbindungen der Formel (I) hergestellt werden indem in einem ersten Schritt n Mol EO und m Mol PO pro Mol Glycerin oder Polyglycerin angelagert werden und in einem zweiten Schritt p Mol eines linearen alpha-Olefinepoxids mit 4 bis 20 Kohlenstoffatomen pro Mol alkoxylierten Glycerins oder Polyglycerins angelagert werden, als Entschäumer in wäßrigen Systemen.

Anlagerungsprodukte dieses Typs sind bekannt. Die EP A 345 684 beschreibt Reinigungsmittel, die ein Chlorbleichmittel enthalten und zusätzlich ein gegenüber diesen Bleichmitteln stabiles nichtionische Tensid enthalten, unter dessen allgemeine Formel auch die spezifischen Glycerin-EO/PO-Anlagerungsprodukte der Formel (I) fallen. Die nichtionischen Tenside gemäß EP-A-0 345 684 bleiben auch in Anwesenheit der Chlor bleichmittel Schaumarm bzw. Schaumdämpfend. Die EP-A-340 704 beschreibt eine wässerige saure Reinigerformulierung, die als Verdicker ein Polyetherpolyol enthält, welches beispielsweise durch Umsetzung von Glycerin mit Ethylenoxid und Propylenoxid und anschließender Reaktion mit einem 1,2-Alkylenoxid, hergestellt wird. Eine entschäumende Wirkung dieser Verbindungen wird nicht beschrieben.

Die erfindungsgemäß verwendeten Verbindungen werden in an sich bekannter Weise hergestellt, indem man Glycerin oder Polyglycerine mit Ethylenoxid und Propylenoxid in Gegenwart saurer oder alkalischer Katalysatoren unter Druck und bei erhöhten Temperaturen, beispielsweise zwischen 80 °C und 200 °C, umsetzt. Die Alkoxylierung kann in der Weise vorgenommen werden, daß man das Glycerin oder Polyglycerin in einer Random-Polymerisation gleichzeitig mit den vorgesehenen Mengen Ethylenoxid und Propylenoxid umsetzt. Weiterhin kann man Glycerin- oder Polyglycerin-EO/PO-Blockpolymere herstellen, indem zuerst mit dem einen und dann mit dem anderen Alkylenoxid umgesetzt wird, wobei sowohl die Reihenfolge Ethylenoxid/Propylenoxid als auch Propylenoxid/Ethylenoxid möglich ist. In einer bevorzugten Ausführungsform werden Verbindungen der Formel (I) verwendet, bei denen das Glycerin oder Polyglycerin zuerst mit Ethylenoxid und anschließend mit Propylenoxid umgesetzt wird.

Die Polyglycerine, die zur Herstellung der erfindungsgemäß verwendeten Verbindungen eingesetzt werden, fallen beispielsweise bei der technischen Glyceringewinnung als Destillationsrückstände an, können aber auch durch Kondensation von Glycerin in Gegenwart alkalischer Katalysatoren unter Luftausschluß bei erhöhter Temperatur und vermindertem Druck gewonnen werden. In der Regel werden die erfindungsgemäß verwendeten Verbindungen aus technischen Polyglycerinen hergestellt, bei denen es sich um Gemische der verschiedenen Oligomeren handelt. Bevorzugt ist die Verwendung von Verbindungen der Formel (I), in denen x eine Zahl zwischen 2 und 5 bedeutet.

In einer bevorzugten Ausführungsform der Erfindung werden Verbindungen der Formel (I) in denen x eine Zahl zwischen 2 und 6 ist, verwendet, bei deren Herstellung pro Mol Polyglycerin n = 150 bis 300 Mol Propylenoxid und m = 30 bis 60 Mol Ethylenoxid angelagert werden. Weiterhin werden bevorzugt Verbindungen der Formel (I), bei denen x gleich 1 ist, verwendet, bei deren Herstellung pro Mol Glycerin n = 10 bis 40 Mol Ethylenoxid und m = 40 bis 100 Mol Propylenoxid angelagert werden.

Die alkoxylierten Glycerine oder Polyglycerine werden in einem zweiten Schritt mit linearen alpha-Olefinepoxiden mit 4 bis 20 Kohlenstoffatomen zu Verbindungen der Formel (I) umgesetzt. Dabei wird pro Mol Glycerin oder Polyglycerin zwischen 1 und 10 Mol alpha-Olefinepoxid angelagert. Die alkoxylierten Glycerine und Polyglycerine werden dazu in an sich bekannter Weise unter alkalischer Katalyse mit den epoxidierten alpha-Olefinen mit 4 bis 20 Kohlenstoffatomen versetzt und bei Temperaturen zwischen 80 °C und 200 °C bei Normaldruck zur Reaktion gebracht. In einer bevorzugten Ausführungsform werden Verbindungen der Formel (I) verwendet, die durch Reaktion alkoxylierten Glycerins oder Polyglycerins mit alpha-Olefinepoxiden mit 8 bis 18 Kohlenstoffatomen erhalten werden. In diesen Verbindungen enthält der Rest R' der Formel (I) 6 bis 16 Kohlenstoffatome. Weiterhin bevorzugt ist die Verwendung von Verbindungen der Formel (I) in denen x gleich 1 ist, die durch Umsetzung eines erfindungsgemäß alkoxylierten Monoglycerins mit p = 3 oder 4 Mol eines linearen alpha-Olefins hergestellt werden. Bevorzugt ist auch die Verwendung von Verbindungen der Formel (I) in denen x eine Zahl zwischen 2 und 6 ist, die durch Umsetzung eines erfindungsgemäßen alkoxylierten Polyglycerins mit 3 bis 8 Mol eines linearen alpha-Olefins hergestellt werden.

Die epoxidierten alpha-Olefine sind bekannte Verbindungen, die durch Epoxidierung der entsprechenden 1,2-ungesättigten Alkylene gewonnen werden können. Als alpha-Olefinepoxide können sowohl solche mit einer geraden Zahl an Kohlenstoff-atomen eingesetzt werden oder solche, die eine ungerade Anzahl an Kohlenstoff-atomen aufweisen, sowie Mischungen dieser Typen. Bedingt durch den Herstellungsprozess können die linearen alpha-Olefine auch als Mischungen verschiedener Isomere vorliegen, beispielsweise mit unterschiedlichen C-Kettenlängen oder Stellung der Epoxid-Funktion.

Die erfindungsgemäß verwendeten Verbindungen der Formel (I) sind flüssige niedrigviskose Verbindungen, die eine gute entschäumende Wirkung zeigen, biologisch abbaubar sind und nur eine sehr geringe Neigung zur Hydrolyse aufweisen. Die Verbindungen der Formel (I) können pur oder in Lösung beziehungsweise als Dispersion den wässerigen Systemen zugesetzt werden. Als Lösungs- oder Dispersionsmittel können Alkohole, Ester oder auch Methylenchlorid, vorzugsweise jedoch Wasser, verwendet werden. Die Verbindungen der Formel (I) können erfindungsgemäß in weiten Mengenverhältnissen eingesetzt werden. Sie zeigen bereits bei Zugabe geringer Mengen, vorzugsweise zwischen 0,002 bis 0,1 Gew.-%, bezogen auf die Menge des zu entschäumenden wässerigen Systems, gute Wirksamkeit. Die Verbindungen der Formel (I) können auch in Kombination mit anderen bekannten Schauminhibitoren oder Entschäumern verwendet werden.

Die Verbindungen der Formel (I) können bei der Herstellung von Nahrungsmitteln eingesetzt werden. Vorzugsweise werden die Verbindungen der Formel (I) bei der Verarbeitung von Zuckerrüben verwendet, beispielsweise bei der Rübenschwemme und beim Waschen und Schnitzeln der Zuckerrüben, bei der Extraktion des Zuckers aus den Rübenschnitzeln und der nachfolgenden Behandlung mit Kalkmilch als auch bei den mehrstufigen Verdampfern, in denen so lange Wasser entzogen wird, bis ein mit Zucker übersättigter Kristallbrei, die Füllmasse, entsteht. Ebenso können die Verbindungen der Formel (I) in der Hefeindustrie bei der technischen Herstellung von Backhefe durch Fermentation sowie bei der Kartoffelverarbeitung eingesetzt werden. Ein weiteres Einsatzgebiet ist die Lack- und Farbenindustrie. Bei der Homogenisierung von wasserbasierten Lacken und Farben kann es zum Einrühren von Luft kommen, die als Bläschen mit der Farbe oder dem Lack aufgetragen werden. Platzen diese Bläschen entstehen Löcher oder Schwachstellen im Film und Vermindern so die Halbarkeit des Farb- oder Lackauftrags. Ein weiteres Einsatzgebiet stellt die Papierherstellung dar, beispielsweise bei der Sulfitzellstoffkochung, bei der Papiererzeugung, Papierrecycling und beim Papierstreichen, und die Verwendung bei der Aufbereitung von Abwässern.

### Beispiele

### Herstellung eines mit C₁₂-alpha-Olefinepoxiden umgesetzten Glycerin-EO-PO-Blockpolymeren

774,1 kg (202 mol) eines Glycerin-EO-PO-Blockpolymeren (x=1, n=12,5, m=55) wurden in einem Rührkessel mit 5,1 kg 50 Gew.%-iger Kalilauge (45,5 mol) vermischt und anschließend 146,6 kg (796,7 mol) eines alpha-Olefinepoxids mit 12 Kohlenstoffatomen zudosiert. Die Mischung wurde auf 160 °C erhitzt bis der Gehalt an freiem Epoxid auf weniger als 0,1 Gew.-% zurückgegangen war. Anschließend wurde das Produkt abgekühlt und nach Zugabe von 4,9 kg Milchsäure (54,4 mol) zur Neutralisation abfiltriert und getrocknet.
freies Epoxid: < 0,1 % OH-Zahl: 46-50 Säurezahl: < 0,5

### Prüfung auf entschäumende Wirkung

Zur Prüfung der entschäumenden Wirkung wurde 1 Liter einer wässerigen 10 Gew.-% igen Rübenkrautlösung in eine 5 Liter fassende, skalierte Glassäule eingefüllt und unter Rühren auf die gewünschte Testtemperatur erwärmt. Nachdem die Temperatur erreicht worden war, wurden 100 ppm des Enschäumers zudosiert und anschließend von unten mittels eines Kompressors 600 l/h Luft über einen Zeitraum von 500 Sekunden in das Testgefäß eingeblasen. Das entstehende Schaumvolumen wurde mit Hilfe der Skalierung in Litern abgelesen. In Tabelle 1 finden sich die Schaumvolumina nach 60, 200 und 500 Sekunden für Temperaturen von 30 und 40 °C.
Entschäumer:
E1: Glycerin-EO-PO-Blockpolymer umgesetzt mit C₁₂-Epoxid,
x = 1, n = 12,5, m = 55, p = 4
E2: Glycerin-EO-PO-Blockpolymer umgesetzt mit C₁₂-Epoxid,
x = 1, n = 17,5, m = 80, p = 4
V1: Glycerin -EO-PO-Blockpolymer mit Ölsäure verestert,
n = 12,5, m = 55

**Tabelle 1**

| Schaumvolumina in Litern in Abhängigkeit von Temperatur und Zeit | | | | | | |
|---|---|---|---|---|---|---|
| | E1 | | E2 | | V1 | |
| Zeit[sec] | 30 °C | 40 °C | 30 °C | 40 °C | 30 °C | 40 °C |
| 60 | 1,6 | 1,8 | 1,7 | 1,8 | 1,6 | 2,0 |
| 200 | 1,9 | 2,3 | 2,1 | 2,4 | 2,6 | 3,6 |
| 500 | 2,5 | 3,3 | 2,8 | 3,4 | 4,1 | 5,6 |

Die erfindungsgemäß verwendeten Entschäumer zeigen insbesondere bei höheren Temperaturen und längeren Messzeiten eine deutlich bessere schaumdämpfende Wirkung als das Vergleichsprodukt.

## Patentansprüche

1. Verwendung von Glycerin- oder Polyglycerin-Anlagerungsprodukten der allgemeinen Formel (I)
[R]ₓ-(EO)ₙ-(PO)ₘ-(AO)ₚ-H (I)
in der [R]ₓ für einen Glycerin- oder Polyglycerinrest steht und EO eine Ethylenoxideinheit, PO eine Propylenoxideinheit und AO einen Rest der Formel (II) 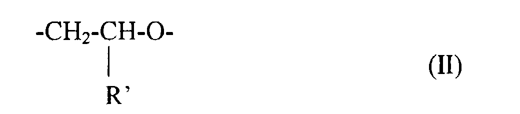 bedeutet, wobei R' ein linearer Alkylrest mit 2 bis 18 Kohlenstoffatomen ist, x eine Zahl zwischen 1 und 6, n eine Zahl zwischen 5 und 60, m eine Zahl zwischen 30 und 300 und p eine Zahl zwischen 1 und 10 bedeutet, wobei die Verbindungen der Formel (I) hergestellt werden indem in einem ersten Schritt n Mol EO und m Mol PO pro Mol Glycerin oder Polyglycerin angelagert werden und in einem zweiten Schritt p Mol eines linearen alpha-Olefinepoxids mit 4 bis 20 Kohlenstoffatomen pro Mol alkoxylierten Glycerins oder Polyglycerins angelagert werden, als Entschäumer in wäßrigen Systemen.

2. Verwendung nach Anspruch 1, dadurch gekennzeichnet, daß man das Glycerin oder Polyglycerin zuerst mit Ethylenoxid und anschließend mit Propylenoxid umsetzt.

3. Verwendung nach Anspruch 1, dadurch gekennzeichnet, daß man das Glycerin oder Polyglycerin gleichzeitig mit Ethylenoxid und Propylenoxid umsetzt.

4. Verwendung nach einem der Ansprüche 1 bis 3, dadurch gekennzeichnet, daß Verbindungen der Formel (I) in denen x eine Zahl zwischen 2 und 5 ist, eingesetzt werden.

5. Verwendung nach einem der Ansprüche 1 bis 3, dadurch gekennzeichnet, daß bei Verbindungen der Formel (I) in denen x gleich 1 ist, n eine Zahl von 10 bis 40 und p eine Zahl von 40 bis 100 ist .

6. Verwendung nach einem der Ansprüche 1 bis 4, dadurch gekennzeichnet, daß bei Verbindungen der Formel (I), in denen x eine Zahl von 2 bis 6 ist, n eine Zahl von 30 bis 60 und p eine Zahl von 150 bis 300 ist.

7. Verwendung nach einem der Ansprüche 1 bis 6, dadurch gekennzeichnet, daß der Rest R' der Formel (II) 6 bis 16 Kohlenstoffatome enthält.

8. Verwendung nach einem der Ansprüche 1 bis 7, dadurch gekennzeichnet, daß bei Verbindungen der Formel (I) in denen x gleich 1 ist, p eine Zahl von 3 oder 4 ist.

9. Verwendung nach einem der Ansprüche 1 bis 7, dadurch gekennzeichnet, daß bei Verbindungen der Formel (I) in denen x eine Zahl zwischen 2 und 6 ist, p eine Zahl von 3 bis 8 ist.

10. Verwendung nach einem der Ansprüche 1 bis 9, dadurch gekennzeichnet, daß das wäßrige System bei der Verarbeitung von Zuckerrüben eingesetzt wird.

11. Verwendung nach einem der Ansprüche 1 bis 9, dadurch gekennzeichnet, daß das wäßrige System bei Fermentationsprozessen eingesetzt wird.

12. Verwendung nach einem der Ansprüche 1 bis 9, dadurch gekennzeichnet, daß das wäßrige System bei der Herstellung von Farben und Lacken eingesetzt wird.

13. Verwendung nach einem der Ansprüche 1 bis 9, dadurch gekennzeichnet, daß das wäßrige System bei der Herstellung und Aufarbeitung von Papier eingesetzt wird.

14. Verwendung nach einem der Ansprüche 1 bis 9, dadurch gekennzeichnet, daß das wäßrige System bei der Aufbereitung von Abwasser eingesetzt wird.

## Claims

1. The use of glycerol or polyglycerol addition products corresponding to general formula (I):
[R]ₓ-(EO)ₙ-(PO)ₘ-(AO)ₚ-H (I)
in which [R]ₓ is a glycerol or polyglycerol moiety and EO is an ethylene oxide unit, PO is a propylene oxide unit and AO is a residue corresponding to formula (II): 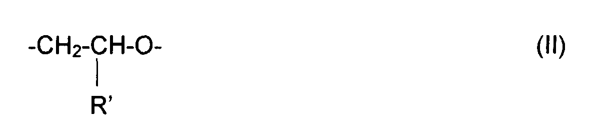 where R' is a linear alkyl group containing 2 to 18 carbon atoms, x is a number of 1 to 6, n is a number of 5 to 60, m is a number of 30 to 300 and p is a number of 1 to 10,
the compounds of formula (I) being prepared by adding on n moles EO and m moles PO per mole glycerol or polyglycerol in a first step and adding on p moles of a linear alpha-olefin epoxide containing 4 to 20 carbon atoms per mole alkoxylated glycerol or polyglycerol in a second step, as defoamers in aqueous systems.

2. The use claimed in claim 1, characterized in that the glycerol or polyglycerol is reacted first with ethylene oxide and then with propylene oxide.

3. The use claimed in claim 1, characterized in that the glycerol or polyglycerol is reacted simultaneously with ethylene oxide and propylene oxide.

4. The use claimed in any of claims 1 to 3, characterized in that compounds of formula (I) in which x is a number of 2 to 5 are used.

5. The use claimed in any of claims 1 to 3, characterized in that, in compounds of formula (I) where x is 1, n is a number of 10 to 40 and p is a number of 40 to 100.

6. The use claimed in any of claims 1 to 4, characterized in that, in compounds of formula (I) where x is a number of 2 to 6, n is a number of 30 to 60 and p is a number of 150 to 300.

7. The use claimed in any of claims 1 to 6, characterized in that the substituent R' in formula (II) contains 6 to 16 carbon atoms.

8. The use claimed in any of claims 1 to 7, characterized in that, in compounds of formula (I) where x is 1, p is the number 3 or 4.

9. The use claimed in any of claims 1 to 7, characterized in that, in compounds of formula (I) where x is a number of 2 to 6, p is a number of 3 to 8.

10. The use claimed in any of claims 1 to 9, characterized in that the aqueous system is used in the processing of sugar beet.

11. The use claimed in any of claims 1 to 9, characterized in that the aqueous system is used in fermentation processes.

12. The use claimed in any of claims 1 to 9, characterized in that the aqueous system is used in the production of paints and lacquers.

13. The use claimed in any of claims 1 to 9, characterized in that the aqueous system is used in the production and recycling of paper.

14. The use claimed in any of claims 1 to 9, characterized in that the aqueous system is used in the treatment of wastewater.

## Revendications

1. Utilisation, comme agents antimousse dans des systèmes aqueux, de composés d'addition de glycérine ou de polyglycérine de la formule générale (I)
[R]ₓ-(EO)ₙ-(PO)ₘ-(AO)ₚ-H (I)
dans laquelle [R]ₓ représente un radical glycérine ou polyglycérine, EO correspond à une unité d'oxyde d'éthylène, PO est égal à une unité d'oxyde de propylène et AO est un radical de la formule (II) 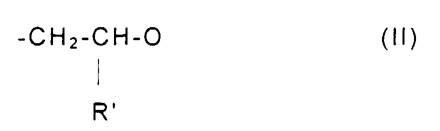 dans laquelle R' représente un radical alkyle comportant 2 à 18 atomes de carbone, x correspond à un nombre entre 1 et 6, n est égal à un nombre entre 5 et 60, m est un nombre entre 30 et 300, et p représente un nombre entre 1 et 10, les composés de la formule (I) étant produits en additionnant dans une première étape, n mol d'EO et m mol de PO par mol de glycérine ou de polyglycérine, et dans une deuxième étape, p mol d'un époxyde d'alpha-oléfine linéaire comportant 4 à 20 atomes de carbone par mol de glycérine ou de polyglycérine alcoxylée.

2. Utilisation selon la revendication 1, caractérisée en ce que l'on fait réagir la glycérine ou la polyglycérine, tout d'abord avec l'oxyde d'éthylène et ensuite, avec l'oxyde de propylène.

3. Utilisation selon la revendication 1, caractérisée en ce que l'on fait réagir la glycérine ou la polyglycérine simultanément avec l'oxyde d'éthylène et avec l'oxyde de propylène.

4. Utilisation selon une des revendications 1 à 3, caractérisée en ce que l'on met en oeuvre des composés de la formule (I) dans lesquels x représente un nombre entre 2 et 5.

5. Utilisation selon une des revendications 1 à 3, caractérisée en ce que dans les composés de la formule (I) dans lesquels x est égal à 1, n est un nombre de 10 à 40 et p, un nombre de 40 à 100.

6. Utilisation selon une des revendications 1 à 4, caractérisée en ce que dans les composés de la formule (I) dans lesquels x est un nombre de 2 à 6, n est un nombre de 30 à 60 et p, un nombre de 150 à 300.

7. Utilisation selon une des revendications 1 à 6, caractérisée en ce que le radical R' de la formule (II) comporte 6 à 16 atomes de carbone.

8. Utilisation selon une des revendications 1 à 7, caractérisée en ce que dans les composés de la formule (I) dans lesquels x est égal à 1, p est un nombre égal à 3 ou à 4.

9. Utilisation selon une des revendications 1 à 7, caractérisée en ce que dans les composés de la formule (I) dans lesquels x est un nombre entre 2 et 6, p est un nombre de 3 à 8.

10. Utilisation selon une des revendications 1 à 9, caractérisée en ce que le système aqueux est mis en oeuvre dans la transformation des betteraves sucrières.

11. Utilisation selon une des revendications 1 à 9, caractérisée en ce que le système aqueux est mis en oeuvre dans des processus de fermentation.

12. Utilisation selon une des revendications 1 à 9, caractérisée en ce que le système aqueux est mis en oeuvre dans la fabrication de peintures et vernis.

13. Utilisation selon une des revendications 1 à 9, caractérisée en ce que le système aqueux est mis en oeuvre dans la fabrication et le traitement du papier.

14. Utilisation selon une des revendications 1 à 9, caractérisée en ce que le système aqueux est mis en oeuvre dans le traitement des eaux usées.
